# EUROPEAN PATENT APPLICATION

(11) **EP 1 418 581 A2**
(43) Date of publication of application: **12.05.2004**
(21) Application number: 03025486.6
(22) Date of filing: 06.11.2003
(51) Int. Cl.: G11B 20/00, G06F 1/00, G11B 27/034, G11B 27/10

(54) **Authoring apparatus, authoring program, and recording medium on which authoring program has been recorded**

(30) Priority: 11.11.2002 JP 2002327441
(71) Applicant: SONY CORPORATION, Tokyo (JP)
(72) Inventor: Hitachi, Akio, Shinagawa-ku Tokyo (JP); Kazami, Shinichi, Shinagawa-ku Tokyo (JP); Tsuchida, Yoshio, Shinagawa-ku Tokyo (JP); Ota, Osamu, Shinagawa-ku Tokyo (JP)
(74) Representative: Müller - Hoffmann & Partner

(57) **Abstract**

Contents are supplied from a studio to a plant through a CD-R disc. In the plant, when it is determined that the contents have not been encrypted in accordance with Info_Sheet, a module encrypts the contents with different keys. A key locker creating portion groups the plurality of keys with which the contents have been encrypted, encrypts grouped keys with a disc key, and creates a key locker. A disc image creating portion creates image data to be recorded on a product CD with contents of a first session and a second session and the key locker. In accordance with the image data, the CD is produced. Since keys with which contents have been encrypted are grouped and encrypted, the keys can be prevented from leaking out.

## Description

### BACKGROUND OF THE INVENTION

### Field of the Invention

The present invention relates to an authoring apparatus that creates software of which a plurality of types of digital contents have been integrated, an authoring method thereof, an authoring program thereof, and a recording medium on which the authoring program has been recorded.

### Description of the Related Art

An operation for creating software of which various types of materials such as audio data, image data, and text data have been integrated is referred to as authoring operation. For example, related art references 1 and 2 describe authoring systems that perform authoring operations for video CDs. Software created by authoring operations is recorded on recording mediums such as compact disc - read only memory (CD-ROM) discs, digital versatile discs (DVDs), and so forth. The recording mediums are sold and distributed.

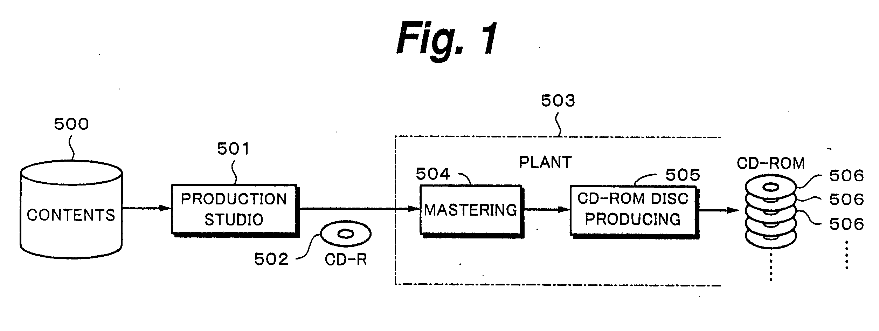

Fig. 1 schematically shows a structure of an example of a conventional authoring system. A content storing portion 500 stores materials such as audio data, image data, and text data, which are necessary to create software. A production studio 501 creates data to be recorded on recording mediums as software with materials stored in the content storing portion 500. The created data is converted into a format of recording mediums, which are actually sold and distributed, and then recoded on a compact disc - recordable (CD-R) disc 502. The CD-R disc 502 is supplied to a plant 503.

Alternatively, data created in the production studio is recorded on a magnetic tape and supplied to the plant 503. In this case, the format conversion is performed on the plant 503 side.

The data that has been recorded on the CD-R disc and supplied to the plant 503 is supplied to a mastering portion 504. The mastering portion 504 produces a glass master in accordance with the supplied data. A metal master is produced from the glass master. A prototype CD-ROM disc is produced by a stamping process. After the prototype CD-ROM disc has been successively checked, a CD-ROM disc producing portion 505 quantitatively produces CD-ROM discs 506, 506, ...

### [Related Art Reference 1]

### Japanese Patent Laid-Open Publication No. HEI 8-63880

### [Related Art Reference 1]

### Japanese Patent Laid-Open Publication No. HEI 8-267963

In recent years, to increase a value of audio data recorded on a conventional CD-DA disc, a technology of which another type of data for example image data or audio data that has been compression-encoded in accordance with a predetermined system is recorded on the CD-DA has been proposed. The data that has been recorded in such a manner is reproduced by for example a personal computer. The image data and audio data, which has been compression-encoded, are encrypted with a predetermined key for copyright protection and recoded on a recording medium. These data can be reproduced with a decryption key that is obtained in a predetermined manner.

In this case, if the decryption key is taken out, encrypted data can be easily decrypted. Thus, it becomes difficult to protect copyright of recorded contents. Since a conventional authoring system does not have countermeasures against leakage about the key, there is a risk of which the key is easily taken out.

In the foregoing example of the authoring system, various people can freely enter the production studio 501. When the studio 501 is not securely managed, there is a risk of which the key easily leaks out. In addition, in the plant 503, after CD-ROM discs are quantitatively produced, a mastering process and a checking process are performed. Thus, it is probably difficult to control information.

Therefore, a first object of the present invention is to provide an authorizing apparatus that prevents encryption key for created software from leaking out, an authoring method thereof, an authorizing program thereof, and a recording medium on which the authorizing program is recorded.

In addition, an authoring operation for producing a medium on which a plurality of types of contents are integrally recorded is normally performed by application software on a computer. Hereinafter the application software is referred to as authoring tool. However, the authoring operation might be performed independently for each music label. Conventionally, the authorizing tool is customized and provided in a fixed structure in accordance with the specification of each music label.

For example, when data to be recorded is encrypted with a predetermined key, depending on whether or not it is permitted to take out the key to the plant 503, the structure of the authorizing tool largely varies. In addition, depending on an authoring method of each music label, the structure of the authorizing tool varies. Thus, since the authorizing tool provider should provide a different authorizing tool for each music label, the burden imposed thereto is large.

On the other hand, when the authorizing method of which the music label side receives an authorizing tool is changed, the music label side cannot easily change the authorizing tool in according with the changed authorizing method.

Therefore, a second object of the present invention is to provide an authorizing apparatus that allows a structure of an authorizing tool to be easily changed, an authoring method thereof, an authorizing program thereof, and a recording medium on which the authorizing program has been recorded.

### OBJECTS AND SUMMARY OF THE INVENTION

A first aspect of the present invention is an authoring apparatus, comprising: a structure creating portion for encrypting a plurality of input contents with different keys and creating a structure for recording the plurality of contents on a recording medium; and a data output portion for grouping the plurality of keys with which the plurality of contents have been encrypted, encrypting the grouped keys, creating the grouped encrypted keys, and outputting the plurality of contents in a recordable format to the recording medium in accordance with the structure created by the structure creating portion, the grouped encrypted keys being output by the data output portion.

A second aspect of the present invention is an authoring method, comprising the steps of:
encrypting a plurality of input contents with different keys and creating a structure for recording the plurality of contents on a recording medium; and
grouping the plurality of keys with which the plurality of contents have been encrypted, encrypting the grouped keys, creating the grouped encrypted keys, and
outputting the plurality of contents in a recordable format to the recording medium in accordance with the structure created at the structure creating step, the grouped encrypted keys being output at the data output step.

A third aspect of the present invention is an authoring program for causing a computer to execute an authoring method, comprising the steps of: encrypting a plurality of input contents with different keys and creating a structure for recording the plurality of contents on a recording medium; and grouping the plurality of keys with which the plurality of contents have been encrypted, encrypting the grouped keys, creating the grouped encrypted keys, and outputting the plurality of contents in a recordable format to the recording medium in accordance with the structure created at the structure creating step, the grouped encrypted keys being output at the data output step.

A fourth aspect of the present invention is a recording medium on which an authoring program has been recorded, the authoring program being configured to cause a computer to execute an authoring method, comprising the steps of: inputting a plurality of contents, encrypting the plurality of contents with different keys, and creating a structure for recording the plurality of contents on a recording medium; and grouping the plurality of keys with which the plurality of contents have been encrypted, encrypting the grouped keys, creating the grouped encrypted keys, and outputting the plurality of contents in a recordable format to the recording medium in accordance with the structure created at the structure creating step, the grouped encrypted keys being output at the data output step.

A fifth aspect of the present invention is an authoring apparatus, comprising: a structure creating portion for creating a structure for recording a plurality of input contents on a recording medium; and a data output portion for encrypting the plurality of contents with different keys, grouping the plurality of keys with which the plurality of contents have been encrypted, encrypting the grouped keys, creating the grouped encrypted keys, and outputting the grouped encrypted keys in a recordable format to the recording medium, the grouped encrypted keys being output by the data output portion.

A sixth aspect of the present invention is an authoring method, comprising the steps of: creating a structure for recording a plurality of input contents on a recording medium; and encrypting the plurality of contents with different keys, grouping the plurality of keys with which the plurality of contents have been encrypted, encrypting the grouped keys, creating the grouped encrypted keys, and outputting the grouped encrypted keys in a recordable format to the recording medium, the grouped encrypted keys being output at the data output step.

A seventh aspect of the present invention is an authoring apparatus, comprising: a structure creating portion for creating a structure for recording a plurality of input contents on a recording medium; grouped encrypted key creating means for grouping a plurality of keys, encrypting the grouped keys, and creating the grouped encrypted keys; a data output portion for outputting the plurality of contents in a format recordable to the recording medium in accordance with the structure created by the structure creating portion, the grouped encrypted keys being output by the data output portion; and encrypting means for encrypting the plurality of contents with different keys, wherein the encrypting means is included in at least one of the structure creating portion and the data output portion, the grouped encrypted key creating means being configured to encrypt the plurality of keys with which the plurality of contents have been encrypted and create the grouped encrypted keys.

An eighth aspect of the present invention is an authoring method, comprising the steps of: creating a structure for recording a plurality of input contents on a recording medium; grouping a plurality of keys, encrypting the grouped keys, and creating the grouped encrypted keys; outputting the plurality of contents in a format recordable to the recording medium in accordance with the structure created at the structure creating step, the grouped encrypted keys being output at the data output step, and encrypting the plurality of contents with different keys, wherein the encrypting step is included in at least one of the structure creating step and the data output step, the grouped encrypted key creating step being performed by encrypting the plurality of keys with which the plurality of contents have been encrypted and creating the grouped encrypted keys.

A ninth aspect of the present invention is an authoring apparatus, comprising: file creating means for creating a file in which a content is stored; management information creating means for creating a management structure for managing the file created by the file creating means; data converting means for converting the file into data in a predetermined format recordable to a recording medium in accordance with the management structure created by the management structure creating means; and encrypting means for encrypting the content, wherein the file creating means, the management structure creating means, the data converting means, and the encrypting means are structured as independently executable modules, and wherein the encrypting means is configured to encrypt output data of the file creating means and output the encrypted data to the management structure creating means or encrypt output data of the management structure creating means and output the encrypted data to the data changing means.

A tenth aspect of the present invention is an authoring method, comprising the steps of: creating a file in which a content is stored; creating a management structure for managing the file created at the file creating step; converting the file into data in a predetermined format recordable to a recording medium in accordance with the management structure created at the management structure creating step; and encrypting the content, wherein the file creating step, the management structure creating step, the data converting step, and the encrypting step are structured as independently executable modules, and wherein the encrypting step is performed between the file creating step and the management structure creating step or between the management structure creating step and the data converting step.

An eleventh aspect of the present invention is an authoring program for causing a computer to execute an authoring method, comprising the steps of: creating a file in which a content is stored; creating a management structure for managing the file created at the file creating step; converting the file into data in a predetermined format recordable to a recording medium in accordance with the management structure created at the management structure creating step; and encrypting the content, wherein the file creating step, the management structure creating step, the data converting step, and the encrypting step are structured as independently executable modules, and wherein the encrypting step is performed between the file creating step and the management structure creating step or between the management structure creating step and the data converting step.

A twelfth aspect of the present invention is a recording medium on which an authoring program has been recorded, the authoring program being configured to cause a computer to execute an authoring method, comprising the steps of: creating a file in which a content is stored; creating a management structure for managing the file created at the file creating step; converting the file into data in a predetermined format recordable to a recording medium in accordance with the management structure created at the management structure creating step; and encrypting the content, wherein the file creating step, the management structure creating step, the data converting step, and the encrypting step are structured as independently executable modules, and wherein the encrypting step is performed between the file creating step and the management structure creating step or between the management structure creating step and the data converting step.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a block diagram schematically showing a structure of an example of a conventional authoring system;
Fig. 2 is a schematic diagram showing a data layout of an example of a CD 50 according to an embodiment of the present invention;
Fig. 3 is a schematic diagram showing a format of an example of data recorded in a second session;
Fig. 4 is a schematic diagram describing a structure of a directory in which a DMX file is managed;
Fig. 5A and Fig. 5B are block diagrams describing authoring systems according to the present embodiment of the present invention;
Fig. 6 is a block diagram showing a structure of an example of a computer apparatus that can perform a process to be performed in a studio;
Fig. 7 is a block diagram showing a structure of an example of a computer apparatus that can perform a process to be performed in a plant;
Fig. 8 is a functional block diagram showing a detailed structure of an example of an authoring system in case (1);
Fig. 9 is a schematic diagram showing an example of an XML file that is input to a DMX file creating module;
Fig. 10 is a schematic diagram describing a process of a DMX directory creating module;
Fig. 11 is a schematic diagram showing an example of an XML file that is input to the DMX directory creating module;
Fig. 12 is a schematic diagram showing an example of usage rule information described in an XML file;
Fig. 13 is a schematic diagram describing a process of a session combining module;
Fig. 14 is a schematic diagram showing an example of an XML file that is input to a content encrypting module;
Fig. 15 is a schematic diagram showing an example of an XML file that is input to an Sinf creating module;
Fig. 16 is a schematic diagram showing an example of an XML file that is input to an EMD key substituting module;
Fig. 17 is a functional block diagram showing a detailed structure of an example of the plant;
Fig. 18 is a functional block diagram showing a detailed structure of an example of an authoring system in case (2);
Fig. 19 is a flow chart showing a process in the case (1);
Fig. 20 is a flow chart showing a process in the case (1); and
Fig. 21 is a flow chart showing an example of a process of a disc mastering module.

### DETAILED DESCRIPTION OF THE PREFERRED EMBODIMENTS

Next, an embodiment of the present invention will be described. For easy understanding, an example of an authoring system according to the present invention will be described. In the authoring system according to the present invention, audio data, content data in association therewith, and other content data are integrally handled a part of which is encrypted and recorded on a recording medium.

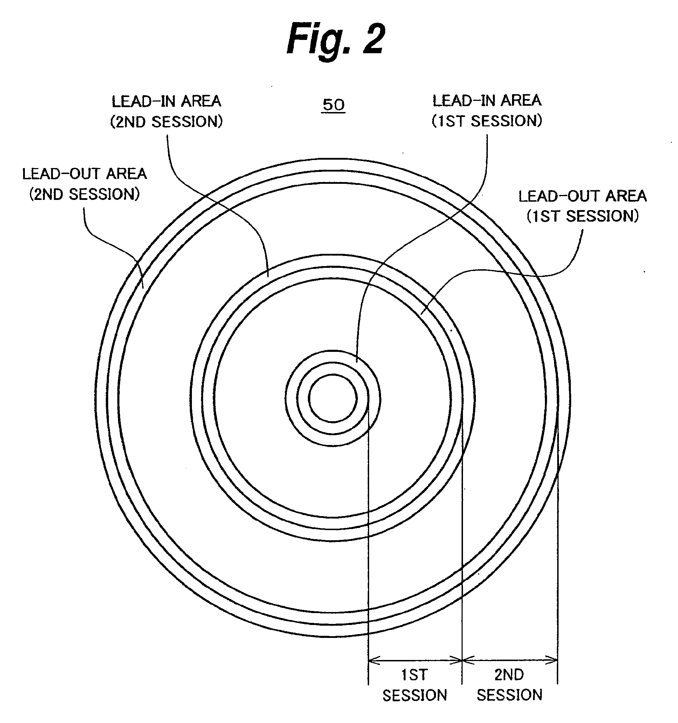

According to the present embodiment of the present invention, as a recording medium, a CD (Compact Disc) is used. The CD is a two-session disc that has two recording areas. Fig. 2 shows a data layout of an example of the CD denoted by reference numeral 50 according to the present embodiment of the present invention. On the CD 50, a first (1st) session is disposed on an inner periphery thereof and a second (2nd) session on an outer periphery thereof. In each of the first and second sessions, a lead-in area, a data area, and a lead-out area are successively disposed in the outward direction. In the first session, audio data of a compact disc - digital audio (CD-DA) disc is recorded. In the second session, data of a compact disc - read only memory (CD-ROM) disc is in association with the audio data recorded in the first session is recorded.

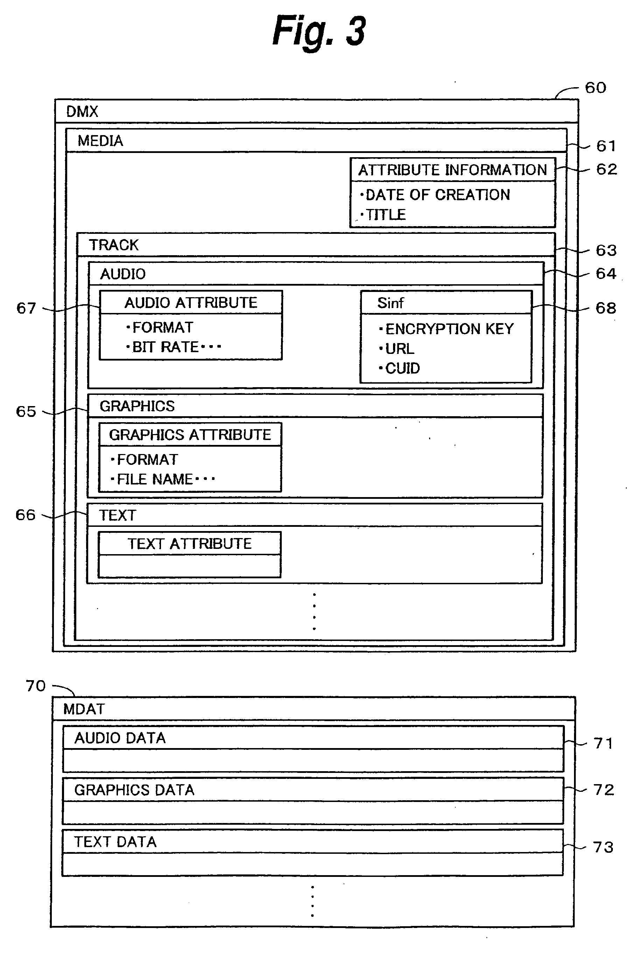

Fig. 3 shows a format of an example of data recorded in the second session. According to the present embodiment, the data is divided into management information and main data and recorded in the second session. In the example, the management information is represented as a DMX file 60, whereas the main data is represented as an MDAT 70. Corresponding to one music program of audio data recorded in the second session, for example one DMX file 60 is created. In Fig. 3, for convenience, the DMX file 60 and the MDAT 70 are represented as independent files. However, in reality, the DMX file 60 and the MDAT 70 are structured as a single file.

The DMX file 60 is hierarchically structured. For example, the DMX file 60 manages in three hierarchical levels data of the MDAT 70. A highest hierarchical level MEDIA 61 integrally manages data of one content of the DMX file 60. The MEDIA 61 describes for example attribute information 62 with respect to entire content such as the date and time of the creation of the file and the title thereof.

A hierarchical level TRACK 63 manages information of each type of data managed by the DMX file 60. In the example shown in Fig. 3, as the types of data, audio data, image data, and text data are handled by one DMX file 60. They are managed by a hierarchical level AUDIO 64, a hierarchical level GRAPHICS 65, and a hierarchical level TEXT 86.

Each of the hierarchical levels AUDIO 64, the hierarchical level GRAPHICS 65, and the hierarchical level TEXT 66 contains information that represents the type of data to be handled and information that represents the location of the main data to be handled. For example, in the hierarchical level AUDIO 64, these information is stored in an AUDIO attribute 67. When the type of data is audio data, the information includes attribute information of audio data such as data format (compression-encoding system) and bit rate. The information that represents the location of the main data includes for example the file name of the main data and address information on the recording medium.

In addition, for example the hierarchical level AUDIO 64 contains as information Sinf 68 information that represents the location of license information (uniform resource locator (URL) or the like) and identification information (contents unique identifier (CUID) with respect to audio data managed by the hierarchical level AUDIO 64. Encryption key information with which audio data managed by the hierarchical level AUDIO 64 is encrypted may be contained in the information Sinf 68.

The MDAT 70 stores main data managed by the hierarchical level AUDIO 64, the hierarchical level GRAPHICS 65, and the hierarchical level TEXT 66 contained in the DMX file 60. The main data of the audio data that has been compression-encoded is stored as AUDIO data 71. Main data of image data and the main data of text data are stored as GRAPHICS data 72 and TEXT data 73, respectively.

The main data of the audio data, the main data of the image data, the main data of the text data can be encrypted in accordance with a predetermined system and stored in the MDAT 70. An encryption key used in the encrypting process may be stored in the information Sinf 68 or recorded in another area of the CD 50. It is preferred to record the encryption key in an area that the user cannot access on the CD 50 so that the encryption key is not known to him or her. The encryption key can be further encrypted and recorded.

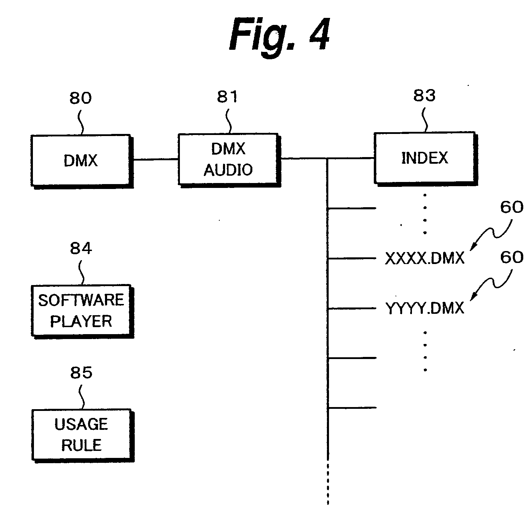

As exemplified in Fig. 4, the DMX file 60 is managed in a directory structure in the second session. In the root level, a directory DMX 80 is disposed. Under the directory DMX 80, a directory DMX audio 81 is disposed. Under the directory DMX audio 81, DMX files 60, 60, ... are disposed. In the example shown in Fig. 4, the DMX file 60 has an extension ".DMX" that represents that the data is a DMX file 60. An INDEX 83 describes the structure of the directory. For example, the INDEX 83 describes information of the DMX files 60, 60, ... disposed in the directory DMX audio 81. In Fig. 4, for simplicity, the MDAT 70 that corresponds to the DMX file 60 is omitted.

In the root level, a software player 84 and usage rule information 85 are disposed. The software player 84 reproduces audio data managed by the DMX files 60. The usage rule information 85 is composed of license information of the audio data.

As a format of which a plurality of types of data can be integrally handled, main data and management information are separated, and the management information is managed in a directory structure, for example QuickTime (registered trademark of Apple Computer Inc.) or equivalent thereof can be used.

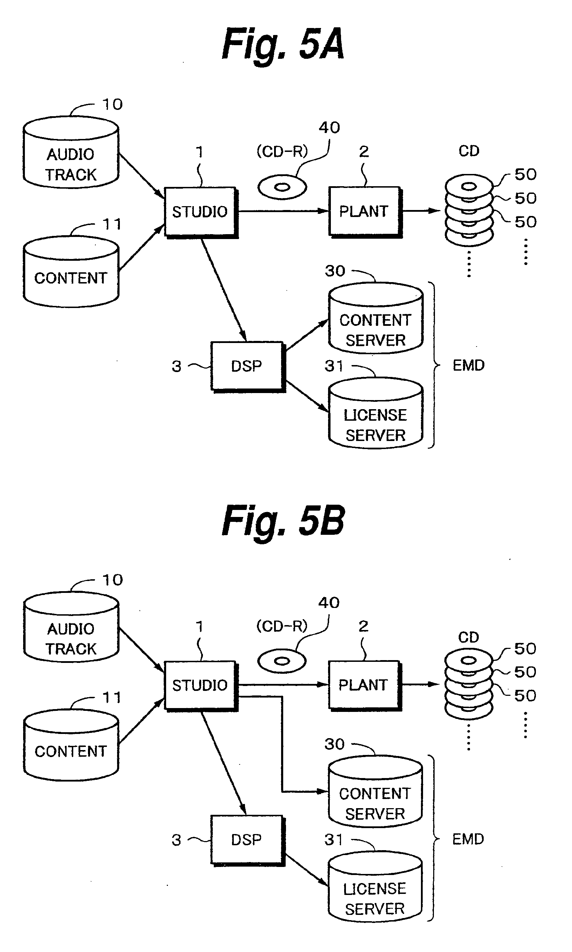

Next, with reference to Figs. 5A and 5B, authorizing systems according to the present embodiment of the present invention will be described. Fig. 5A shows a structure of an example of an authoring system that encrypts data on a plant 2 side. Fig. 5B shows a structure of an example of an authoring system that encrypts data on a studio 1 side. In the following description, the system shown in Fig. 5A is denoted by case (1), whereas the system shown in Fig. 5B is denoted by case (2).

According to the present invention, since an authorizing tool is composed of a plurality of modules having respective functions, when the arrangement of the modules is changed, the authorizing tool can be applied to both the case (1) and the case (2).

Next, the case (1) will be described. In Fig. 5A, a material of audio data is supplied as an audio track 10 to the studio 1. In addition, a content 11 in association with the audio track 10 is supplied to the studio 1. The content 11 is composed of audio data, image data, and text data. The audio data has been compression-encoded in accordance with a predetermined system. The content 11 is not always in association with the audio track 10.

In the studio 1, a track image of the first session of the CD 50 is created in accordance with the supplied audio track 10. In addition, a track image of the second session of the CD 50 is created with the content 11. The track images of the first and second sessions are combined. Information that represents whether or not data contained in the track image of the second session has been encrypted is added to the combined track image. The resultant data is recorded on a recording medium such as a compact disc - recordable (CD-R) disc 40. The CD-R disc 40 is supplied to the plant 2.

In the plant 2, data is reproduced from the CD-R disc 40. Data of the first session and data of second session are extracted. In addition, information that represents whether or not data contained in the track image of the second session has been encrypted is read from the CD-R disc 40. In the example of the case (1), since the data of the second session has not been encrypted, individual contents are encrypted with different keys Kcn. The keys Kcn are grouped and further encrypted.

In a disc mastering process, with the track image of the first session, the track image of the second session, and the data of the grouped encryption keys of the individual contents reproduced from the CD-R disc 40, a disc image to be recorded on the CD 50 is created. The disc image data is modulated in accordance with the eight-to-fourteen modulation (EFM) system and output to a laser beam recorder (LBR) so as to record the disc image data on the CD 50.

With the disc image data that has been modulated in accordance with the EFM system, a glass master is produced by the LBR. With the glass master, a metal master is produced. With the metal master, a prototype CD is produced. The prototype CD is checked in a predetermined checking process. When the prototype CD has been passed in the checking process, the CD 50 can be quantitatively produced.

On the other hand, the data of which the contents of the audio data and the content 11 have been integrated in the studio 1 is supplied to a download service provider (DSP) 3. The DSP 3 provides the user with for example a content download service through which contents are downloaded to him or her through the Internet. The DSP 3 composes an electronic music distribution (EMD).

The data supplied to the DSP 3 is encrypted for individual contents with different keys Kcₙ. The encrypted data is supplied to a content server 30 along with content identification information and license information that represents the location of license thereof. In addition, a sub key is created in accordance with the encryption keys Kcₙ. The sub key is stored as license information in a license server 31 along with usage rule information of the data.

For example, the user downloads content data from the content server 30. At that point, the user accesses the license server 31 and obtains license information of the content data. With the sub key contained in the license information, the user decrypts the downloaded content data. As a result, the user can enjoy content data.

In Fig. 5B, in the studio 1, the content 11 is encrypted with the key Kcₙ. The encrypted content is stored in the content server 30. The encryption keys Kcₙ are supplied to the DSP 3. With the keys Kcₙ, a sub key is created. The sub key is stored as license information in the license server 31 along with usage rule information composed of license information of data encrypted with the keys Kcₙ.

On the other hand, a track image of the second session is created in accordance with content data encrypted in the studio 1. The track image of the second session is combined with the track image of the first session of the audio track 10. Information that represents whether or not data contained in the track image of the second session has been encrypted is added to the combined track image and recorded on a recording medium for example a CD-R disc 40. The CD-R disc 40 is supplied to the plant 2.

In the plant 2, data is reproduced from the CD-R disc 40 supplied from the studio 1. Data of the first session and data of the second session are extracted. In addition, the information that represents whether or not the data contained in the track image of the second session has been encrypted is read from the CD-R disc 40. In the case (2), since the data of the second session has been encrypted, it is not encrypted in the plant 2.

The keys Kcₙ with which the data contained in the second session have been encrypted are grouped and encrypted. By the disc mastering process, with the track image of the first session and the track image of the second session extracted from the CD-R disc 40, and the data of which the encryption keys for individual contents have been grouped and encrypted, a disc image to be really recorded on a CD 50 is created. The disc image data is modulated in accordance with the EFM system and output to the LBR so as to record the disc image data on the CD 50. The modulated data is output to the LBR.

In the case (2), as was described above, the encryption keys Kcₙ for the contents stored in the content server 30 of the DSP 3 have been recoded in the second session of the CD 50. Thus, when the user bought the CD 50, he or she can access the content server 30 and decrypt the contents with the keys Kcₙ.

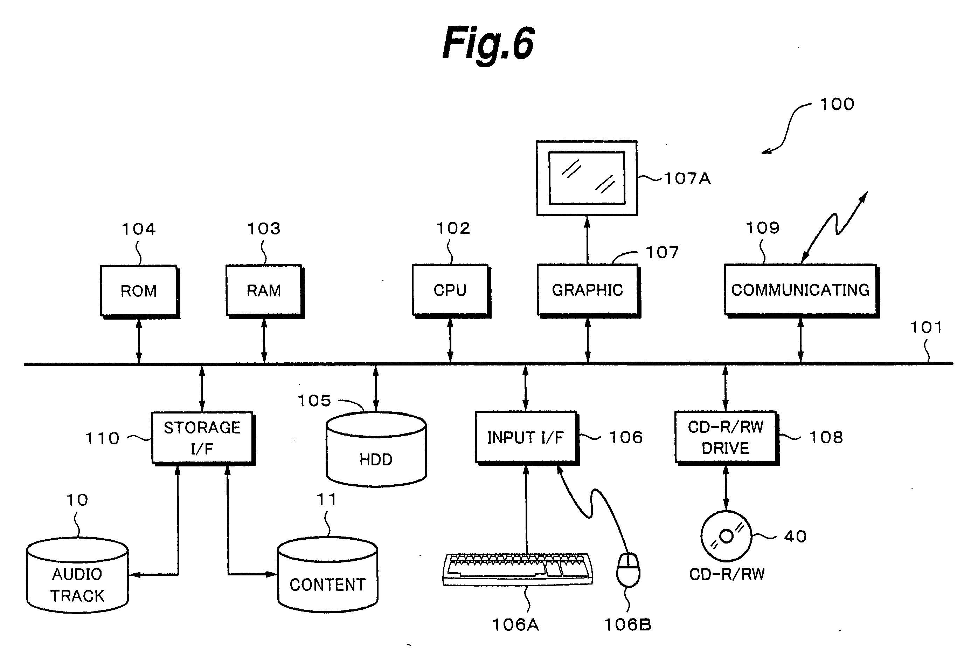

Fig. 6 shows a structure of an example of a computer apparatus 100 that can perform the foregoing process to be performed in the studio 1. A central processing unit (CPU) 102, a random access memory (RAM) 103, a read only memory (ROM) 104, a hard disk drive (HDD) 105, an input interface (I/F) 106, a graphic controlling portion 107, a CD-R/RW drive 108, and a communicating portion 109 are connected to a bus 101.

The HDD 105 stores various types of data and programs. The CPU 102 controls the foregoing process to be performed in the studio 1 in accordance with a program stored in the HDD 105. The RAM 103 is used as a work memory of the CPU 102. The ROM 104 pre-stores for example a startup program for the computer apparatus 100. When the power of the computer apparatus 100 is turned on, the CPU 102 reads a program from the RAM 103 and starts up the computer apparatus 100 in accordance with the program. After the computer apparatus 100 has been started up, a predetermined program and so forth are read from the HDD 105 and stored in the RAM 103. The CPU 102 executes a process in accordance with the program stored in the RAM 103.

An input device such as a key board 106A and/or a mouse 106B is connected to the bus 101 through the input I/F 106. A control code corresponding to user's operation against the input device is output from the input I/F 106 and supplied to the CPU 102. On the other hand, a display control signal corresponding to a program is output from the CPU 102. The display control signal is supplied to a graphic controlling portion 107. The graphic controlling portion 107 converts the display control signal into an image signal and supplies it to a display device 107A that is for example a cathode ray tube (CRT) or a liquid crystal display (LCD).

The CD-R/RW drive 108 records data to the CD-R disc 40 or a compact disc - rewritable (CD-RW) disc and reproduces data from a CD-R disc 40, a CD-RW, or a CD-ROM disc. The reproduced data is supplied to the CPU 102.

The computer apparatus 100 can be connected to for example the Internet or a local area network (LAN) through the communicating portion 109. The communicating portion 109 controls communication through a connected communication network in accordance with an instruction received from the CPU 102.

The audio track 10 and the content 11 described with reference to Fig. 5A and Fig. 5B are stored in a large capacity recording medium disposed outside the computer apparatus 100. The audio track 10 and the content 11 are supplied through for example a storage I/F 110 and temporarily stored in the HDD 105. The audio track 10 and the content 11 stored in the HDD 105 are processed by the CPU 102 in various manners.

Alternatively, when the audio track 10 and the content 11 are created, they may be stored in the HDD 105. The audio track 10 and the content 11 may be stored in for example a server on a network connected to the computer apparatus 100 and the audio track 10 and the content 11 stored in the server may be processed through the communicating portion 109.

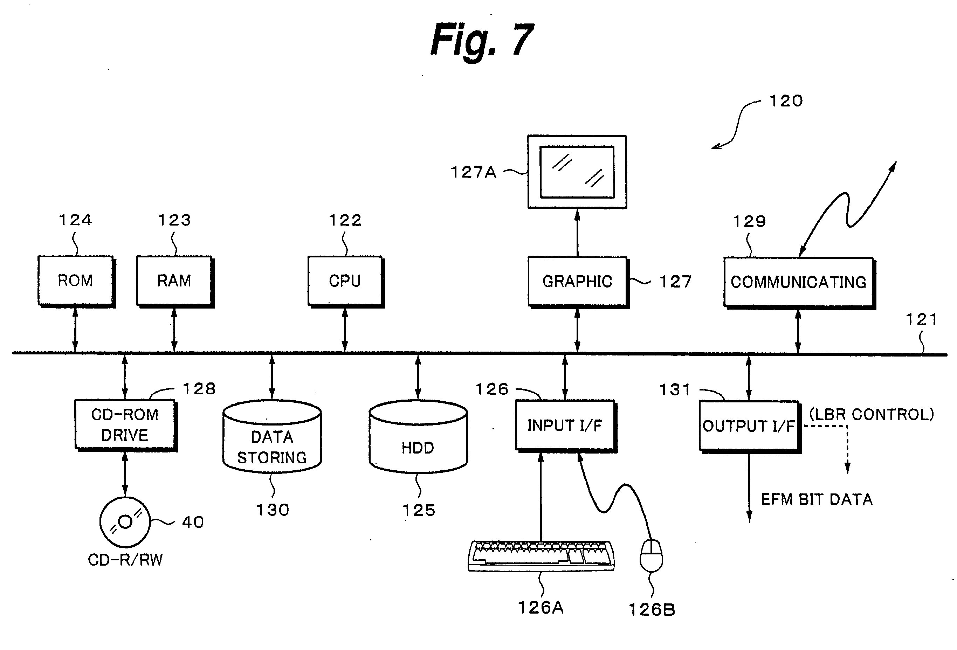

Fig. 7 shows a structure of an example of a computer apparatus 120 that can perform the foregoing process to be performed in the plant 2. The computer apparatus 120 basically has the same structure as the foregoing computer apparatus 120. A CPU 122, a RAM 123, a ROM 124, a HDD 125, an input I/F 126, a graphic controlling portion 127, a CD-ROM drive 128, and a communicating portion 129 are connected to a bus 121.

The HDD 125 stores a variety of types of data and programs. The CPU 122 controls the foregoing process to be performed in the plant 2 in accordance with the programs and data. The RAM 123 is used as a work memory of the CPU 122. The ROM 124 pre-stores for example a startup program for the computer apparatus 120. An input device such as a key board 126A and/or a mouse 126B is connected to the bus 121 through the input I/F 126. A display control signal that is output from the CPU 122 is supplied to the graphic controlling portion 127 and converted into an image signal. The converted image signal is supplied to a display device 127A.

The CD-ROM drive 128 can reproduce data from a CD-R disc 40, a CD-RW disc, a CD-ROM disc, or the like. The reproduced data is supplied to the CPU 122.

The computer apparatus 120 can be connected to a communication network such as the Internet or a local area network (LAN) through the communicating portion 129. The communicating portion 129 controls a communication through the connected communication network in accordance with an instruction received from the CPU 122.

A data storing portion 130 is composed of for example a HDD. The data storing portion 130 temporarily stores data of the first session and data of the second session reproduced from the CD-R disc 40 supplied from the studio 1. The data stored in the data storing portion 130 is processed by the CPU 122 in various manners. In the foregoing example, the HDD 125, in which programs and so forth are stored, is different from the data storing portion 130. Alternatively, the data storing portion 130 may be structured in a predetermined area of the HDD 125.

An output I/F 131 outputs EFM bits of which disc image data has been modulated in accordance with the EFM system in the disc mastering process performed in the plant 2. The output I/F 131 may be an EFM encoder as hardware. The output I/F 131 may output disc image data supplied from the CPU 122. Alternatively, in addition to the EFM bits, the output I/F 131 may output an LBR controls signal with which the LBR is controlled.

In the foregoing example, the computer apparatuses 100 and 120 perform all processes to be performed in the studio 1 and the plant 2. However, the present invention is not limited to such an example. Alternatively, the processes to be performed in the studio 1 and the plant 2 may be distributively processed by a plurality of computer apparatuses connected through for example a network.

Each module that composes the authorizing tool according to the present embodiment is recorded on a recording medium such as a CD-ROM disc and distributed therewith. For example, in the computer apparatus 100, a CR-ROM disc on which each module is recorded is loaded into a CD-R/RW drive and each module is reproduced from the CD-ROM disc. A program file of each module reproduced from the CD-ROM disc is stored in a predetermined area of the HDD 105. When a predetermined command is input from the input device, a program file of a module stored in the HDD 105 is read by the CPU 102 and expanded to the RAM 103. The CPU 102 performs a process for a module in accordance with a program expanded on the RAM 103. Likewise, these procedures apply to the computer apparatus 120. Alternatively, each module may be supplied to the computer apparatus 100 through a network.

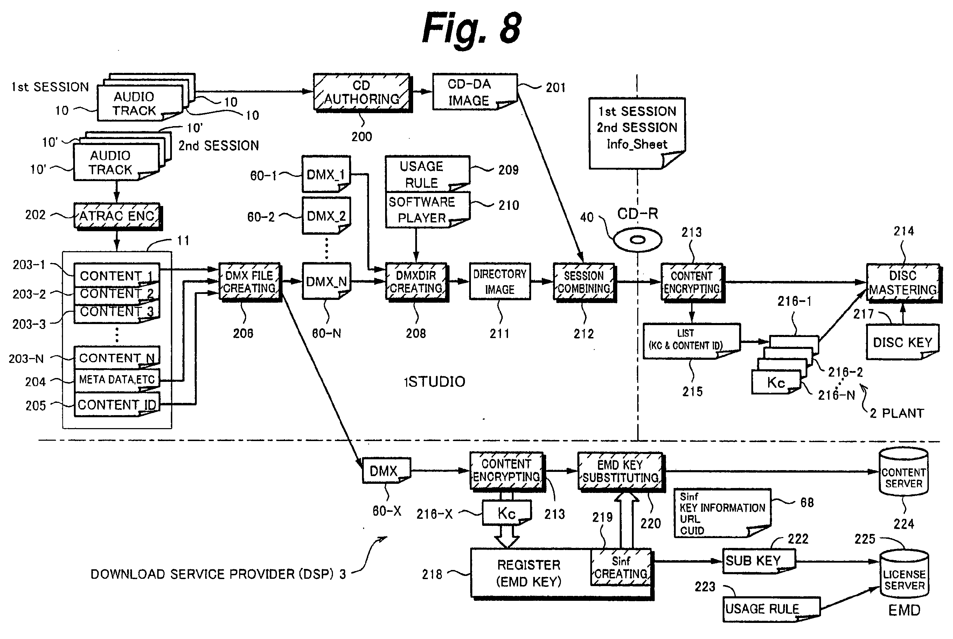

Next, with reference to Fig. 8, the authoring system in the case (1) will be described in detail. Fig. 8 corresponds to Fig. 5A. In Figs. 8, 17, and 18, hatched blocks represent modules that compose the authorizing tool. Each module is stored as a program in the HDD 105. When necessary, each module is called by the CPU 102. The module called to the CPU 102 is expanded on the RAM 103 and executed by the CPU 102.

Data is exchanged between each module through for example the HDD 105. In other words, data that is output from a module is temporarily stored in a predetermined area of the HDD 105. The next module reads the data from the predetermined area of the HDD 105 and performs the process therefor. The predetermined area of the HDD 105 may be pre-set as a default value. Alternatively, an area of data stored in the HDD 105 may be designated whenever each module performs a process. Alternatively, data may be exchanged between each module through for example the RAM 103.

Although the foregoing example shows that each module is independently used, the present invention is not limited thereto. In other words, each module may be integrally controlled by high level application software.

In addition, according to the present embodiment of the present invention, an instruction to each module is described with an extensible markup language (XML) file. The XML is a language of which information is described with tags that can be individually defined. The XML allows described information to have a meaning corresponding to a tag. Since information of meaning of a parameter can be embedded in each tag of an XML file, an operation for editing a parameter can be easily performed.

Next, tags of an XML file will be described in brief. Generally, a tag is composed of a pair of symbols that represent the beginning and the end of a range. A tag can be embedded in text so as to designate a desired range. A symbol that represents the beginning of a range is represented with a pair of symbols "<" and ">" that surround a predefined character string (these symbols are referred to as a beginning tag). A symbol that represents the end of the range is represented with a pair of symbols "</" and ">" (these symbols are referred to as an end tag) that surround the character string that beginning tag surrounds. A character string surrounded by symbols "<" and ">" (or symbols "</" and ">") to a range designated by a pair of tags is allowed to represent a desired meaning. A tag can contain a predetermined parameter. A tag can be nested. Normally, in the description of an XML file, the level of a nested tag is represented by the depth of indent of each line.

The user can crate an XML file with a text editor on the computer apparatuses 100 and 120. At that point, it is preferred to prepare temporary files that describe respective tags so that the user can easily create an ML file with the temporarily files. Alternatively, of course, an XML file may be created with an input window that assists the user to input information for each tag or with a graphical user interface (GUI) that displays an input guide. Since information of meaning of a parameter can be embedded in each tag of an XML file, such an interface can be easily created.

Returning to the description shown in Fig. 8, audio tracks 10, 10, ... recorded in the first session of a CD-DA disc are input to a CD authoring module 200. The CD authoring module 200 sets information necessary for the CD-DA disc such as track order information and track interval information in accordance with the input tracks 10, 10, .... as TOC information of the first session. As a result, a CD-DA image 201 is created.

Audio tracks 10', 10', ... to be recorded in the second session may be the same as the audio tracks 10, 10, ... to be recorded in the first session. Alternatively, the audio tracks 10', 10', ... may be different from the audio tracks 10, 10, ... The audio tracks 10' are input to an ATRAC encoder module 202 and compression-encoded in accordance with the Adaptive Transform Acoustic Coding (ATRAC) system. The ATRAC system is just an example of the present embodiment. Alternatively, the audio tracks 10' may be compression-encoded in accordance with for example the Moving Picture Experts Group 1 Audio Layer 3 (MP3) system, the Advanced Audio Coding (AAC) system, or the ATRAC3 system, which is an advance compression-encoding system of the ATRAC system.

The content 11 may contain a plurality of contents. The content 11 corresponds to an audio track 10' of one movie program. In other words, when there are a plurality of audio tracks 10', 10', ..., there are also corresponding contents 11, 11, ... In compressed audio data of which one audio track 10' has been compression-encoded, content data 203-1 is audio data of which one audio track 10' has been compression-encoded.

Content data 203-2, 203-3, ..., 203-N are for example image data. Examples of image data used as the content data 203-2, 203-2, ..., 203-N are a cover art such as a large size picture in association with music of the content data 203-1, a thumb nail picture of which the picture is reduced, and image data of lyrics.

Content data 204 is meta data described about the content 11 itself and is composed of text data. A content ID 205 is identification information that identifies the content 11. As an example of the content ID 205, the foregoing CUID can be used.

The content 11 composed of a plurality of contents and the CUID is input to a DMX file creating module 206. The DMX file creating module 206 creates a DMX file 60 as described with reference to Fig. 3 with the input content 11 in accordance with a predetermined instruction.

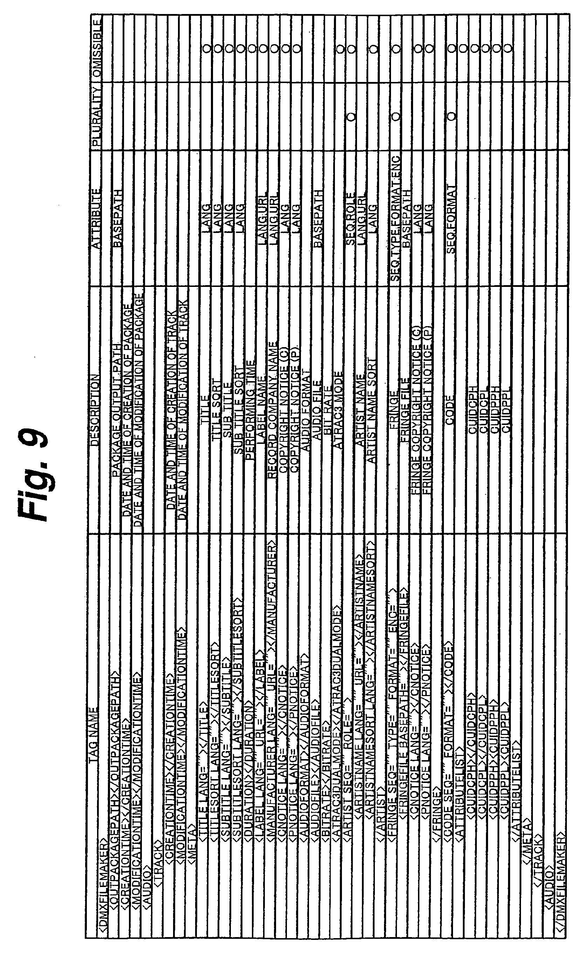

Fig. 9 shows an example of an XML file that is input to the DMX file creating module 206. In the XML file shown in Fig. 9, information of meaning of a parameter surrounded by a pair of the beginning tag and the end tag is embedded. Thus, when an XML file is directly edited, with reference to a tag, the user can easily know data to be described to the tag. This applies to an XML file that follows.

An XML file shown in Fig. 9 describes an output path of a DMX file 60 to be created, the dates and times of the creation and modification thereof, and the dates and times of the creation and modification of an audio track 10'. Corresponding tags describe information about an audio track 10' described by the XML file. For example, as shown in Fig. 9, the XML file describes the title name, the sub title name, the play time, the label name, the record company name, copyright information, the file name including the format and path information of an audio file, the bit rate and the compression mode of audio data, and so forth. The label and record company name may be uniform resource locator (URL) information.

In addition, the XML file describes information about artists and their roles (performing musicians, a composer, a lyric writer, a producer, an arranger, and so forth) of the audio track 10' . The artist information can describe a plurality of artist names. In addition, the artist information can describe a URL. Moreover, the XML file describes information of fringe data in association with the audio data 10'. The fringe data is for example the foregoing image data and test data. As the fringe data, a plurality of pieces of information can be described. Each piece of fringe data describes a file name, which includes path information, and copyright information.

When an attribute "BASEPATH" is designated, as a file name, a predetermined default path is used. In a line of which an attribute "LANG" is designated, it is necessary to designate a language to be used. In a line of which a field "OMISSIBLE" represents "O (circle)", data entry is omissible.

The DMX file creating module 206 creates DMX files 60-1, 60-2, ..., and 60-N corresponding to audio tracks 10', 10', ... in accordance with the XML file shown in Fig. 9 and outputs the created DMX files 60-1, 60-2, ..., and 60-N. Information Sinf 68 described in each of the DMX files 60-1, 60-2, ..., and 60-N describes dummy information.

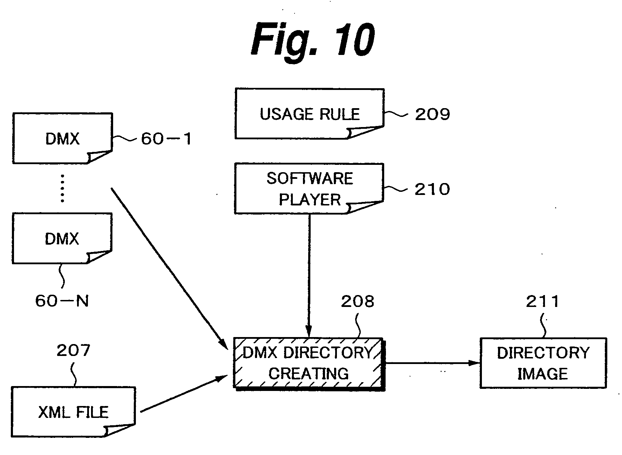

The DMX files 60-1, 60-2, ..., and 60-N are input to a DMX directory creating module 208. In addition to the DMX files 60-1, 60-2, ..., and 60-N, as shown in Fig. 10, usage rule information 209 defined for each music program (audio track 10') and the software player program 210 that reproduces the DMX files 60 are input to the DMX directory creating module 208.

In addition, an XML file 207 that describes information necessary for creating a directory image is input to the DMX directory creating module 208. The DMX directory creating module 208 creates a directory image of the second session in accordance with the description in the XML file 207, as described with reference to Fig. 4. In reality, the DMX directory creating module 208 creates the INDEX 83.

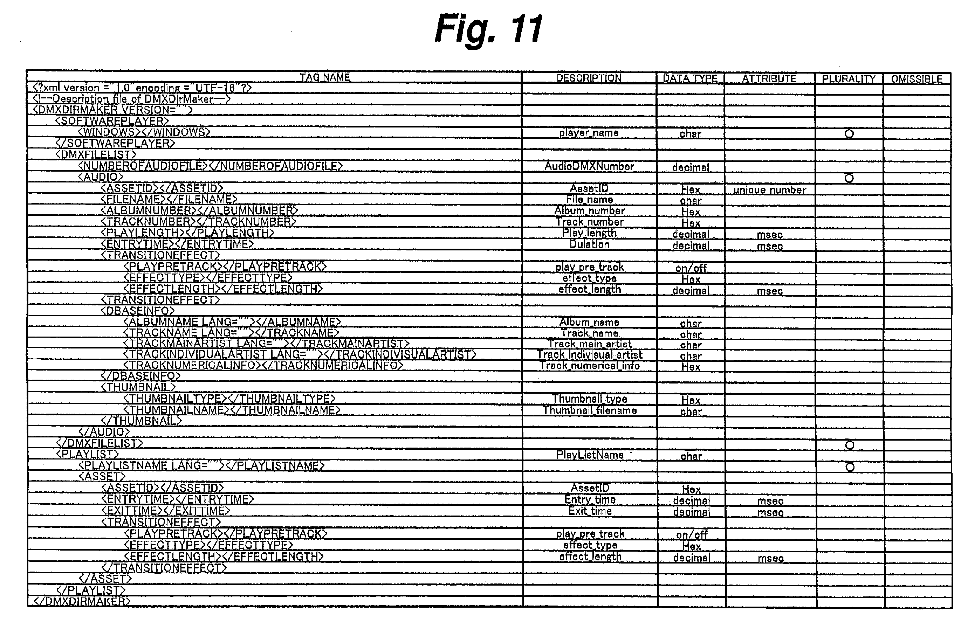

Fig. 11 shows a structure of an example of an XML file 207. A pair of tags <SOFTWAREPLAYER> and </SOFTWAREPLAYER> describe the name of the software player program 210. A line surrounded by a pair of tags <DMXFILELIST> and </DMXFILELIST> describes information of the DMX files 60-1, 60-2, ..., and 60-N. A pair of tags <NUMBEROFAUDIOFILE> and </NUMBEROFAUDIOFILE> describe the number of DMX files. A line surrounded by a pair of tags <AUDIO> and </AUDIO> is repeated the number of times corresponding to the number of DMX files. The repeated lines describe the information of the DMX files 60-1, 60-2, ..., and 60-N. A pair of tags <ASSETID> and </ASSETID> describe an asset ID that is a local ID of a relevant DMX file 60 in the CD 50.

Moreover, in the XML file 207, a line surrounded by a pair of tags <PLAYLIST> and </PLAYLIST> describes play list information of audio data of the DMX files 60-1, 60-2, ..., and 60-N.

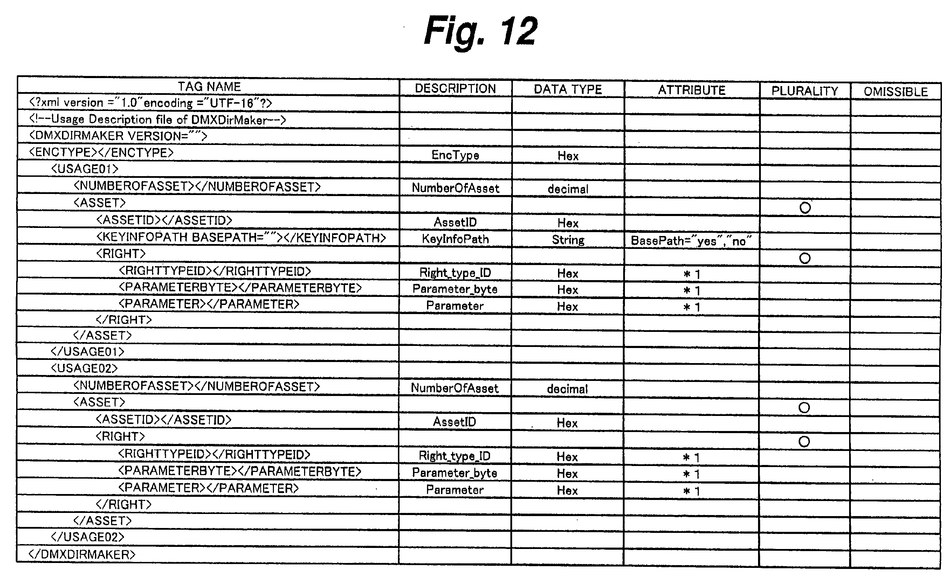

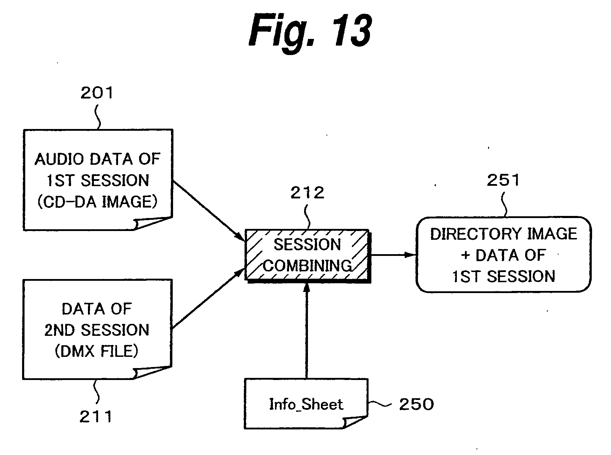

Usage rule information 209 is also described in the XML file 207 and input to the DMX directory creating module 208. Fig. 12 shows an example of the usage rule information 209 described in an XML file. The usage rule information 209 for each DMX file 60 is input. The usage rule information 209 describes information of an encrypting process performed to main data of content data stored in the MDAT 70 corresponding to the relevant DMX file 60 and license information of the content data. In the example shown in Fig. 13, MDAT 70 corresponding to a particular DMX file 60 is encrypted by two types of encrypting processes. Usage rules for the two types of encrypting processes are assigned as two pairs of tags <USAGE01> and </USAGE01> and tags <USAGE02> and </USAGE02>.

In addition, the DMX directory creating module 208 creates information sheet (Info_Sheet) that describes information necessary for only a second authoring process. The Info_Sheet describes the relation of asset IDs and CUIDs and the definition of the encryption type of the encrypting process. As will be described later, when a content is encrypted on the studio 1 side as in the case (2), key information used for the encrypting process is recorded in the Info_Sheet. Since the key information is encrypted and recoded, security is improved.

The directory image 211 created by the DMX directory creating module 208 is input to a session combining module 212. In addition, a CD-DA image 201 created by the CD authoring module 200 is input to the session combining module 212.

As exemplified in Fig. 13, audio data of the first session, namely, the CD-DA image 201 created by the CD authoring module 200, is input to the session combining module 212. In addition, data of the second session, namely the directory image 211 and the Info_Sheet 250, created by the DMX directory creating module 208, is input to the session combining module 212. The session combining module 212 combines the these input data and creates a directory image 251 having the data of the first session.

In other words, the session combining module 212 combines the data of the first session and the data of the second session so as to send data from the studio 1 to the plant 2. In addition, the session combining module 212 performs up to a process for converting the combined data into a predetermined file format, recording the file on a recording medium such as a CD-R disc or a magnetic tape, and supplying the recording medium to the plant 2.

Audio tracks 10, 10, ... are read from the HDD 105 in accordance with the CD-DA image 201 of the first session and recoded on the CD-R disc 40. In addition, the DMX files 60-1, 60-2, ..., and 60-N are read from the HDD 105 in accordance with the directory image 211 of the second session. The corresponding MDAT 70-1, 70-2, ..., and 70-N (not shown) are read and recorded on the CD-R disc 40. In addition, the Info_Sheet 250 is recorded on the CD-R disc 40.

The CD-R disc 40 is supplied to the plant 2. In the plant 2, the data of the first session and the data of the second session are read from the CD-R disc 40. The data of the second session is input to a content encrypting module 213.

The content encrypting module 213 encrypts the MDATs 70-1, 70-2, ..., and 70-N of the input data in accordance with a predetermined encrypting system for example the Data Encryption Standard (DES)the Advanced Encryption Standard (AES).

When the encrypting process is performed, a random number generator (RNG) generates a key Kc that is a numeric value composed of a predetermined number of bits necessary for the encrypting process. The key Kc is created for each content to be encrypted. In other words, keys Kc₁, Kc₂, ..., and Kc_{N} are created for MDATs 70-1, 70-2, ..., and 70-N, respectively. A list 215 that represents the relation of the content IDs that represent encrypted data, for example CUIDs and keys Kc₁, Kc₂, ... , and Kc_{N} is output from the content encrypting module 213.

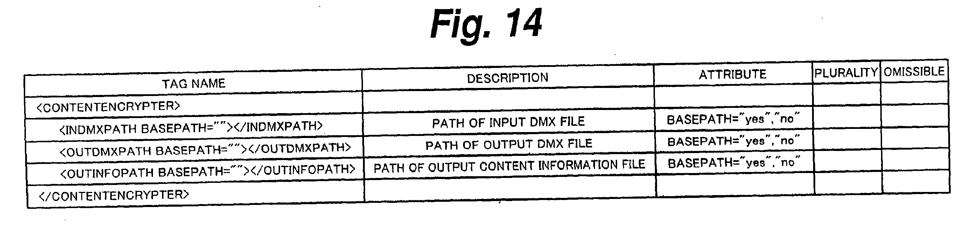

Input data, output data, and path information of an output destination of the list 215 are described in an XML file as exemplified in Fig. 14. A line surrounded by a pair of tags <CONTENTENCRYPTER> and </CONTENTENCRYPTER> describes these path information. When an attribute BASEPATH is "yes", a predetermined default path is used.

The data of the second session encrypted by the content encrypting module 213 is input to a disc mastering module 214. In addition, the data of the first session reproduced from the CD-R disc 40 is input to the disc mastering module 214 (not shown). In addition, keys Kc₁ 216-1, Kc₂ 216-2, ..., and Kcₙ 216-N are input to the disc mastering module 214 in accordance with the list 215. In addition, a disc key 217 is input to the disc mastering module 214.

The disc mastering module 214 groups the keys Kc₁ 216-1, Kc₂ 216-2, ..., and Kc_{N} 216-N and encrypts them with the disc key 217.

The disc mastering module 214 checks a directory structure and file structures of the DMX files 60-1, 60-2, ..., and 60-N of the data of the second session. When the checked result does not represent any problem, the data of the first session and the data of the second session are output in the order of the disc image of the CD 50 to be finally produced. The keys Kc₁ 216-1, Kc₂ 216-2, ..., and Kc_{N} 216-N groups and encrypted with the disc key 217 are output along with the data of the first session and the data of the second session so that the keys Kc₁ 216-1, Kc₂ 216-2, ..., and Kc_{N} 216-N are recorded in a predetermined area of the format of the CD 50. The data according to the disc image of the CD 50 is modulated in accordance with the EFM system by an EFM module (not shown) and output as an EFM signal. The EFM signal is supplied to the LBR.

As described above, the authoring system according to the present embodiment of the present invention can distribute contents recorded in the second session of the CD 50 using the EMD provided by the DSP 3 through a network.

A DMX file 60-X of the DMX files 60-1, 60-2, ..., and 60-N created by the DMX file creating module 206 is supplied to the DSP 3 along with the corresponding MDAT 70-X and input to the content encrypting module 213. The content encrypting module 213 used in the authoring system is the same as the content encrypting module 213 used in the foregoing plant 2. The content encrypting module 213 of the DSP 3 encrypts the MDAT 70-X with the key Kcₓ generated by the RNG. The encrypted data is input to an EMD key substituting module 220.

The key Kcₓ 216-X created by the content encrypting module 213 is supplied to a register portion 218 and input to an Sinf creating module 219 of the register portion 218.

The Sinf creating module 219 creates information Sinf 68 to be stored in the DMX file 60-X. The information Sinf 68 is security information that correlates the DMX file 60-X to be recorded on the CD 50 and a content to be distributed by the EMD. The information Sinf 68 is created for each DMX file 60-X. The information Sinf 68 may be created for each content managed by the DMX file 60-X (for example, an audio track 10' and fringe data (image data, text data, and so forth)).

According to the present embodiment, the information Sinf 68 contains encryption key information about a corresponding content, information (URL) that represents the location of license information, and identification information (CUID).

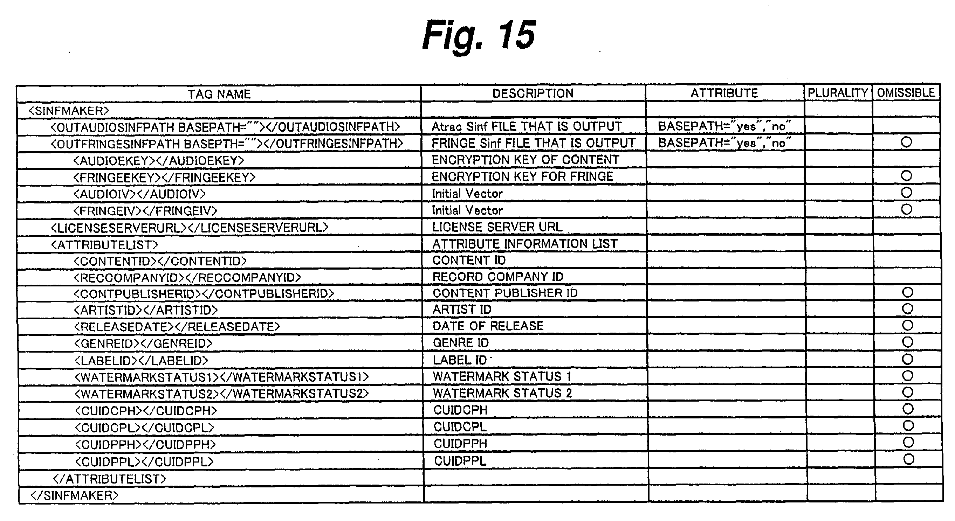

The Sinf creating module 219 creates the information Sinf 68 in accordance with the XML file shown in Fig. 15. The XML file describes information about keys used in the encrypting process and information about license. The information about license includes for example a URL that represents the location of the license, information about an organization that has license, and information about the date and time of release of a content corresponding to the information Sinf 68. When a watermark is embedded in a content, the information about license describes status information of the embedded watermark. In addition, the XML file describes a CUID that identifies the relevant content.

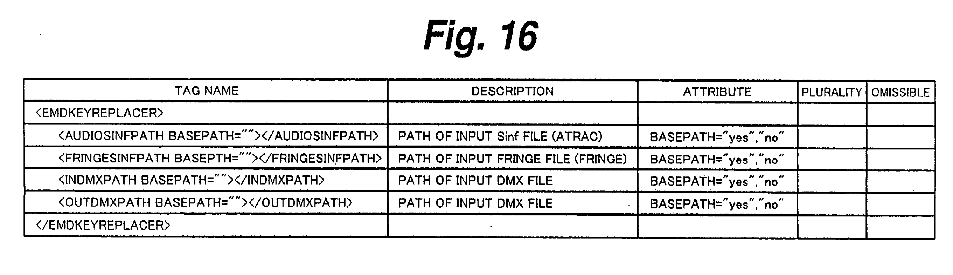

The information Sinf 68 created by the Sinf creating module 219 is input to an EMD key substituting module 220. As described above, in DMX files 60-1, 60-2, ..., and 60-N created by the DMX file creating module 206, the information Sinf 68 is dummy data. The EMD key substituting module 220 substitutes the information Sinf 68, which is dummy data of the DMX file 60-X, with the information Sinf 68 created by the Sinf creating module 219. As shown in Fig. 16, the file having the information Sinf 68 to be substituted and path information of the DMX file 60-X are designated by an XML file.

The DMX file 60-X whose information Sinf 68 has been substituted by the EMD key substituting module 220 is supplied to a content server 224.

The register portion 218 creates a sub key 222 (key Kcrₓ) in accordance with the key Kcₓ that has been used to encrypt a content corresponding to the information Sinf 68. The information Sinf 68 is encrypted with the sub key 222. The encrypted information Sinf 68 and a usage rule 223 corresponding to the content are correlated and supplied to a license server 225.

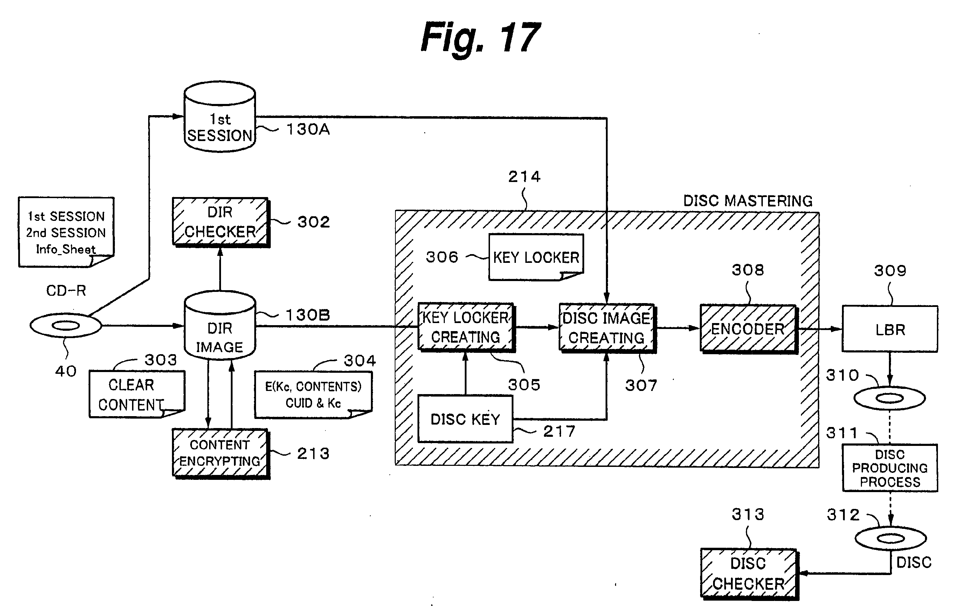

Next, with reference to Fig. 17, the structure of the example of the plant 2 will be described in detail. Data is reproduced from the CD-R disc 40 supplied from the studio 1. Data of the first session is stored in a data storing portion 130A that is a predetermined area of the data storing portion 130. On the other hand, the data of the second session reproduced from the CD-R disc 40 is stored in a data storing portion 130B that is a predetermined portion of the data storing portion 130. In this example, the data storing portion 130A is different from the data storing portion 130B. Alternatively, the data storing portion 130A and the data storing portion 130B may be different storing mediums.

The data of the second session stored in the data storing portion 130B is input to a directory checker module 302. The directory checker module 302 checks whether or not the data recorded in the second session complies with the data (INDEX 83 and so forth) created by the DMX directory creating module 208 of the studio 1. In addition, the directory checker module 302 checks whether or not the structure of the directory is correct in accordance with for example INDEX 83 as described with reference to Fig. 4.

The directory checker module 302 checks whether or not all the DMX files 60-1, 60-2, ..., and 60-N reproduced from the CD-R disc 40 contain data defined as the format and whether or not they have been correctly created in accordance with the format. To do that, the directory checker module 302 checks the hierarchical structure and so forth of the DMX files 60-1, 60-2, ..., and 60-N.

When the checked result represents that the data has any error, the directory checker module 302 outputs a message according to the error. The message is displayed on a displaying means 127A.

In this example, the directory checker module 302 is disposed in the computer apparatus 120 of the plant 2. The directory checker module 302 checks the CD-R disc 40 supplied from the studio 1. However, the present invention is not limited to such an example. For example, the directory checker module 302 may be disposed in the computer apparatus 100 of the studio 1. The directory checker module 302 on the studio 1 side may check the CD-R disc 40. Alternatively, the directory checker modules 302 may be disposed in both the plant 2 and the studio 1.

When the checked result of the directory checker module 302 does not represent any error, MDAT 70-X corresponding to a DMX file 60-X is read from data stored in the data storing portion 130B and input to the content encrypting module 213.

The content encrypting module 213 determines whether or not a content 303 described in the DMX file 60-X is a clear content that has not been encrypted in accordance with the Info_Sheet reproduced from the CD-R disc 40. When for example the Info_Sheet describes information about a key used in an encrypting process, the content encrypting module 213 determines that the content 303 has been encrypted.

When the determined result represents that the content 303 is a clear content, the content encrypting module 213 encrypts the content 303 with the key Kcₓ generated by the RNG in the predetermined encrypting format. An encrypted content 304 is embedded in the original MDAT 70-X and stored in the data storing portion 130B. In addition, the key Kcx and the CUID of the encrypted content 304 are stored in the data storing portion 130B.

The data storing portion 130B stores the DMX file 60 and the MDAT 70 with the directory image of the second session. In addition, when the encrypted content 304 is embedded in the MDAT 70 and stored in the data storing portion 130B, the CUID of the encrypted content 304 and the key Kc used for encrypting the content 304 are correlated and described in the list 215 (not shown).

After the content encrypting module 213 has encrypted the content, data stored in the data storing portion 130B is read, input to the disc mastering module 214 along with the list 215, and supplied to a key locker creating portion 305 of the disc mastering module 214.

In addition, the foregoing disc key 217 is supplied to the key locker creating portion 305. The key locker creating portion 305 groups the keys Kc₁, Kc₂, ..., and Kc_{N}, the CUIDs correlated with the keys Kc₁, Kc₂, ... , and Kc_{N}, and the usage rule information for individual contents described in the list 215, encrypts them with the disc key 217, and creates a key locker 306. In other words, when the key locker 306 is decrypted with the disc key 217, the keys Kc₁, Kc₂, ..., and Kc_{N}, the CUIDs correlated with the keys Rc₁, Kc₂, ..., and Kc_{N}, and the usage rule information for individual contents can be obtained.

The key locker 306 is input to a disc image creating portion 307. In addition, the disc key 217 is input to the disc image creating portion 307. The data of the first session is read from the data storing portion 130A and supplied to the disc image creating portion 307. The directory image of the second session is read from the data storing portion 130B (not shown) and input to the disc image creating portion 307. Of course, at this point, the main data (encrypted content data 304, the DMX file 60, the software player program 210, and so forth) that composes the directory image is input to the disc image creating portion 307.

The disc image creating portion 307 creates a disc image for producing the CD 50 with the these input data. The disc image is created in accordance with a bridge standard of for example International Organization for Standardization 9660 (ISO 9660) or ISO 9660 UDF 1.02.

The disc image creating portion 307 outputs the lead-in area, the data area, and lead-out area of the data of the first session and the lead-in area, the data area, and the lead-out area of the data of the second session in succession. The key locker 306 and the disc key 217 are output along with the data of the first session and the data of the second session so that the key locker 306 and the disc key 217 are recoded in predetermined areas of the layout of the CD 50.

The data that is output from the disc image creating portion 307 is input to an encoder 308 and modulated in accordance with the EFM system. As a result, eight-bit data is converted into 14-bit data as an EFM signal. The EFM signal is supplied to an LBR 309. The LBR 309 produces a master disc 310 by a laser cutting process. With the master disc 310, in a disc producing process 311, a prototype disc 312 is produced.

Data is reproduced from the prototype disc 312 by a disc check module 313. The disc check module 313 checks whether or not security information can be extracted and whether or not music programs can be properly reproduced. When the prototype disc 312 has any error, a message corresponding thereto is output.

In the example, the disc check module 313 checks the prototype disc 312. However, the present invention is not limited to such an example. For example, the disc check module 313 may check a quantitatively produced CD 50.

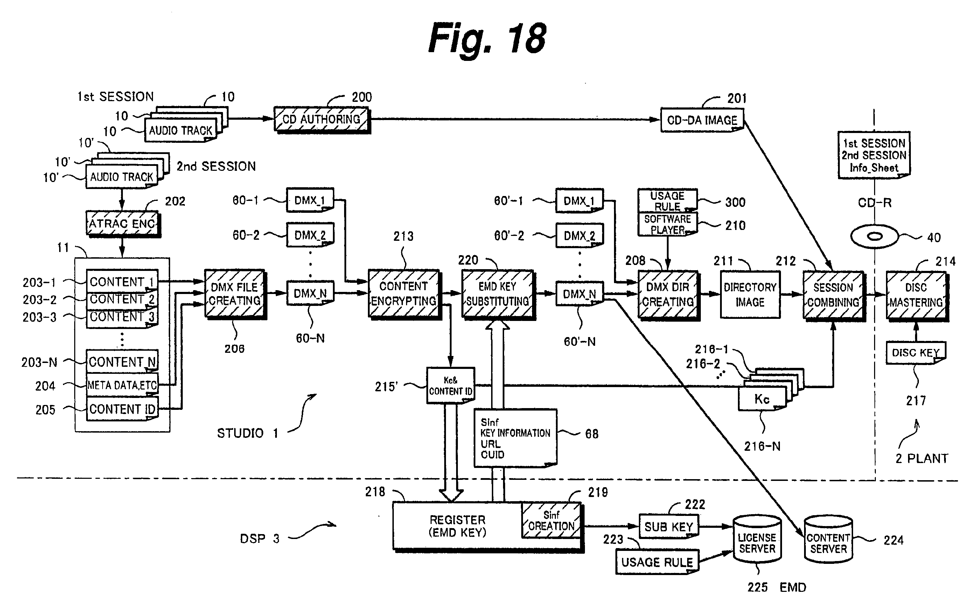

Next, with reference to Fig. 18, the authoring system in the case (2) will be described in detail. Fig. 18 corresponds to Fig. 5B. As was described above, according to the present embodiment of the present invention, when the arrangement of the modules contained in the authorizing tool is changed, different authoring systems can be structured. In Fig. 18, similar portions to those in Fig. 8 and Fig. 17 will be denoted by similar reference numerals and their description will be omitted.

Audio tracks 10, 10, ... to be recorded in the first session of the CD-DA disc are input to the CD authoring module 200 and information necessary for the CD-DA disc such as the track order and track interval information are set. As a result, TOC information of the first session is created and the CD-DA image 201 is created.

On the other hand, audio tracks 10', 10', ... to be recorded in the second session are compression-encoded in accordance with the ATRAC system by the ATRAC encoder module 202. The compression-encoded audio track 10' is represented as a content 203-1. For example, contents 203-2, 203-3, ..., and 203-N as image data, meta data 204 as text data, and a unique content ID 205 that identifies a content compose a content 11. As was described above, as the content ID 205, a CUID may be used.

The content 11 is input to the DMX file creating module 206. The DMX file creating module 206 creates a DMX file 60 in accordance with a predetermined instruction of an XML file. The DMX file creating module 206 creates DMX files 60-1, 60-2, ..., and 60-N corresponding to the audio tracks 10', 10', ... and outputs the DMX files 60-1, 60-2, ..., and 60-N. Information Sinf 68 contained in each of the DMX files 60-1, 60-2, ..., and 60-N describes dummy information.

In the case (2), the DMX files 60-1, 60-2, ..., and 60-N created by the DMX file creating module 206 are input to the content encrypting module 213 along with the corresponding MDAT 70-1, 70-2, ..., and 70-N. The content encrypting module 213 encrypts the MDAT 70-1, 70-2, ..., and 70-N of the input data in accordance with a predetermined encrypting system such as DES or AES. The encrypted data MDAT 70 and corresponding DMX file 60 are input to the EMD key substituting module 220.

When the content encrypting module 213 encrypts the MDAT 70-1, 70-2, ..., and 70-N, the RNG generates keys Kc₁, Kc₂, ..., and Kc_{N} therefor. The content encrypting module 213 outputs a list 215' that represents the relation of content IDs (CUIDs) of the encrypted data and the keys Kc₁, Kc₂, ..., and Kc_{N}.

The list 215' is supplied to the register portion 218 and input to the Sinf creating module 219 contained therein. In addition, the keys Kc₁, Kc₂, .... and Kc_{N} of the list 215' are input to a session combining module 212.

The Sinf creating module 219 creates information Sinf 68 for each of the DMX files 60-1, 60-2, ..., and 60-X with the keys Kc₁, Kc₂, ..., and Kc_{N} and the CUIDs in accordance with an instruction described in the XML file. In addition, the register portion 218 creates a sub key 222 (key Kcrₓ) in accordance with the key Kcₓ with which the content corresponding to the information Sinf 68 has been encrypted. With the sub key 222, the information Sinf 68 is encrypted. The encrypted information Sinf 68 and the usage rule 223 corresponding to the content are correlated and stored in the license server 225.

The information Sinf 68 created by the Sinf creating module 219 is input to the EMD key substituting module 220. The EMD key substituting module 220 substitutes the information Sinf 68 as dummy data of the DMX files 60-1, 60-2, ..., and 60-X with the corresponding information Sinf 68 created by the Sinf creating module 219. The DMX files 60'-1, 60'-2, ..., and 60'-X whose information Sinf 68 was substituted are stored in the content server 224 and input to the DMX directory creating module 208.

In addition, the usage rule information 209 defined for each music program (audio track 10') and the software player program 210 that reproduces the DMX files 60'-1, 60'-2, ..., and 60'-N are input to the DMX directory creating module 208. The DMX directory creating module 208 creates the directory image 211 of the second session with the input data in accordance with an instruction described in the XML file.

The DMX directory creating module 208 creates Info_Sheet that describes information necessary for the later authoring process. The Info_Sheet describes the relation of asset IDs and CUIDs, the definition of the type of the encrypting system, path information of audio tracks 10 to be recorded in the first session, key information used in the encrypting process, and so forth.

The directory image 211 and the Info_Sheet created by the DMX directory creating module 208 and the CD-DA image 201 created by the CD authoring module 200 are input to the session combining module 212. In addition, as described above, the keys Kc₁ 216-1, Kc₂ 216-2, ..., and Kc_{N} 216-N with which the contents 11 were encoded are input to the session combining module 212.

The session combining module 212 combines the input data and creates the directory image 251 having the data of the first session. A CD-R disc 40 on which the data of the first session, the data of the second session, and the Info_Sheet have been recorded Info_Sheet is created in accordance with the created directory image 251 so as to supply the CD-R disc 40 to the plant 2.

In the plant 2, data is reproduced from the CD-R disc 40 received from the studio 1. The data of the first session, the data of the second session, and the Info_Sheet are read from the CD-R disc 40. As described above, since key information has been recorded in the Info_Sheet, it can be determined that the data of the second session reproduced from the CD-R disc 40 has been encrypted on the studio 1 side. Thus, in the plant 2, the encrypting process is cancelled. The data of the first session and the data of the second session reproduced from the CD-R disc 40 are input to the disc mastering module 214.

The keys Kc₁ 216-1, Kc₂ 216-2, ..., and Kc_{N} 216-N with which the contents 11 have been encrypted are decoded from the CD-R disc 40 and input to the disc mastering module 214. The keys Kc₁ 216-1, Kc₂ 216-2, ..., and Kc_{N} 216-N are grouped and further encrypted with the disc key 217. As a result, the foregoing key locker 306 is created.

The disc mastering module 214 checks the directory structure of the data of the second session and the file structures of the DMX files 60'-1, 60'-2, ..., and 60'-N. When the checked result does not represent any problem, the data of the first session and the data of the second session are output in the order of the disc image of the finally produced CD 50. The key locker 306 is output along with the data of the first session and the data of the second session so that the key locker 306 is recorded in a predetermined area of the format of the CD 50. Output data according to the disc image of the CD 50 is modulated in accordance with the EFM system by an EFM module (not shown) and supplied as an EFM signal to the LBR.

Next, with reference to Fig. 17, a process of the plant 2 in the case (2) will be described in detail. Data of the CD-R disc 40 supplied from the studio 1 is reproduced. The data of the first session and the data of the second session are stored in the data storing portion 130A and the data storing portion 130B that are predetermined areas of the data storing portion 130, respectively.

The data of the second session stored in the data storing portion 130B is input to the directory checker module 302. The directory checker module 302 checks whether the data is sufficient, whether or not the directory structure is proper, and whether or not the DMX file is proper. When the checked result does not represent any error, the directory checker module 302 determines whether or not the data of the second session has been encrypted on the studio 1 side in accordance with the Info_Sheet reproduced from the CD-R disc 40. In the case (2), as described above, the studio 1 side has the content encrypting module 213, which encrypts the data of the second session. On the studio 1 side, the content encrypting module 213 determines whether or not the data of the second session has been encrypted in accordance with the encryption key information described in the Info_Sheet.

When the determined result represents that the data of the second session has been encrypted on the studio 1, data is read from the data storing portion 130B. The data is input to the disc mastering module 214, and supplied to the key locker creating portion 305 of the disc mastering module 214.

The key locker creating portion 305 groups the keys Kc₁, Kc₂, ..., and Kc_{N} read from the data storing portion 130B and the CUIDs, which are correlated with the keys, encrypts the grouped keys and CUIDs with the disc key 217, and creates the key locker 306. The key locker 306 and the disc key 217 are input to the disc image creating portion 307. Main data that composes the directory image, which is the data of the first session, the directory image of the second session, which has been read from the data storing portion 130B, the encrypted content data 304, the DMX file 60, the software player program 210 is input to the disc image creating portion 307.

The disc image creating portion 307 creates the disc image of the CD 50 with the these input data. The disc image is input to the encoder 308. The encoder 308 modulates the input data in accordance with the EFM system so that eight-bit data is converted into 14-bit data as an EFM signal. The EFM signal is supplied to the LBR 309. The LBR 309 produces the master disc 310 by a laser cutting method. With the master disc 310, a prototype disc 312 is produced by the disc producing process 311. The disc check module 313 checks the prototype disc 312. When the prototype disc 312 does not have any error, the disc check module 313 determines that the prototype disc 312 can be quantitatively produced.

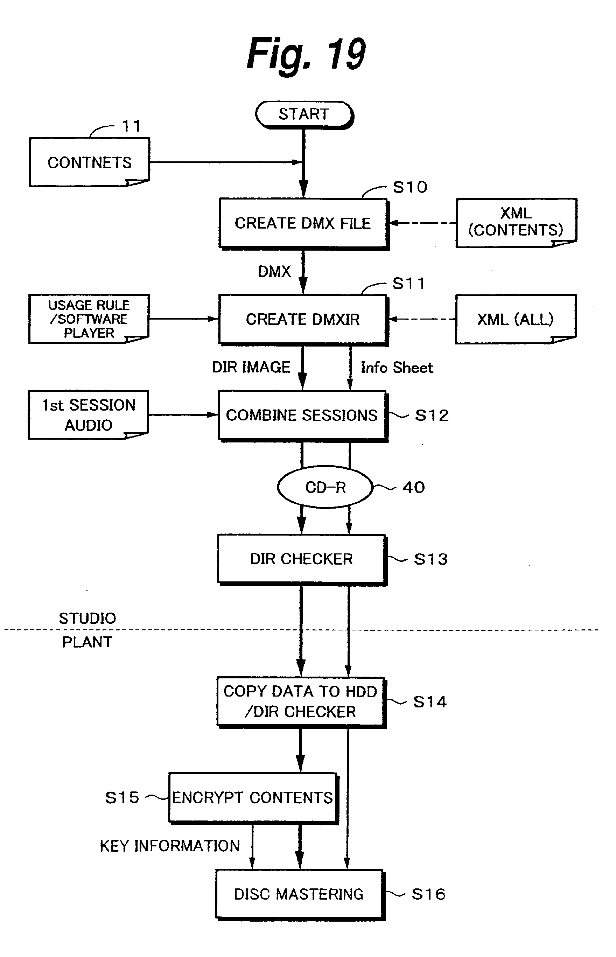

Next, with reference to Fig. 19, Fig. 20, and Fig. 21, a flow of the process of the authoring system according to the present embodiment of the present embodiment will be described. Steps in Fig. 19, Fig. 20, and Fig. 21 correspond to the processes of the modules described with reference to Fig. 8, Fig. 17, and Fig. 18.

Fig. 19 is a flow chart showing a process in the case (1). In the studio 1, at step S10, the DMX file creating module 206 creates DMX files 60-1, 60-2, ..., and 60-N with the contents 11, 11, ... of the second session in accordance with an XML file that describes an instruction for the individual contents. The created DMX files 60-1, 60-2, ..., and 60-N are passed to step S11.

At step S11, in addition, the usage rule information 209 and the software player program 210 are input. A directory image 211 to be recorded in the second session is created by the DMX directory creating module 208 in accordance with the XML file that describes instructions to all the CD 50 to be produced. At step S11, an Info_Sheet is also created. The directory image 211 and the Info_Sheet are passed to step S12.

At step S12, audio tracks 10, 10, ... to be recorded in the first session are input. The audio tracks 10, 10, ... and the directory image 211 to be recorded in the second session are combined by the session combining module 212 and recorded on a CD-R disc 40 along with the Info_Sheet. At step S13, the directory checker module 302 checks the file structure and the directory structure of the CD-R disc 40. When the file structure and the directory structure do not have any error, the CD-R disc 40 is supplied to the plant 2. Step S13 may be omitted.

In the plant 2, at step S14, data is reproduced from the CD-R disc 40. Data of the first session and data of the second session are reproduced from the CD-R disc 40 and stored in the data storing portion 130A and the data storing portion 130B, respectively. The data of the second session is read from the data storing portion 130B. The directory checker module 302 checks the file structure and the directory structure. When the checked result does not represent any error, the contents of the second session are encrypted by the content encrypting module 213 at step S15.

The data of the first session and the data of the second session including encrypted contents are input to the disc mastering module 214 (at step S16). In addition, key information used for the encrypting process and the Info_Sheet reproduced from the CD-R disc 40 at step S14 are input to the disc mastering module 214.

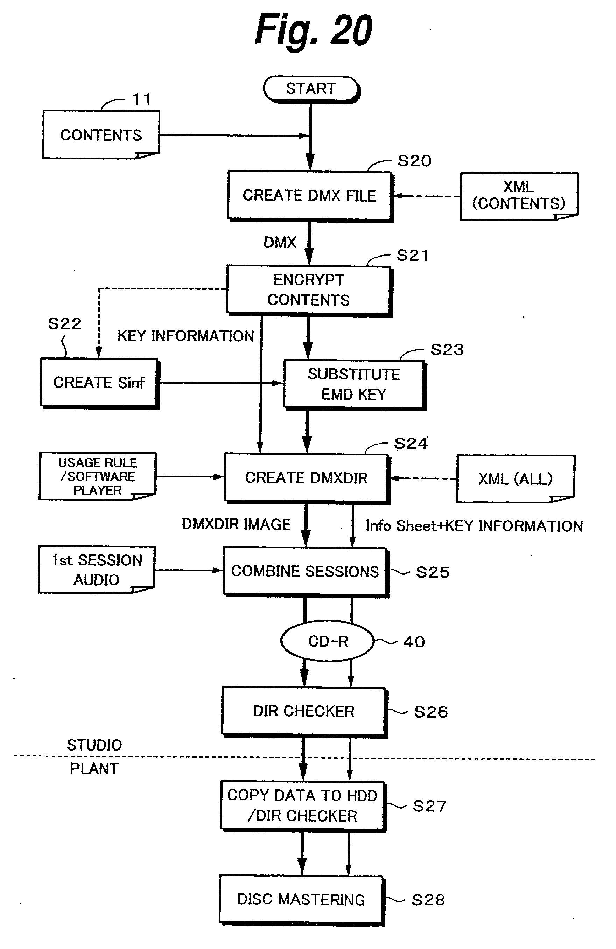

Fig. 20 is a flow chart showing the process in the case (2). At step S20, in the studio 1, the DMX file creating module 206 creates the DMX files 60-1, 60-2, ..., and 60-N with the contents 11, 11, ... of the second session in accordance with instructions described in the XML file. The created DMX files 60-1. 60-2, ..., and 60-N are passed to step S21.

At step S21, the contents corresponding to the DMX files 60-1, 60-2, ..., and 60-N are encrypted by the content encrypting module 213. A step S22, the Sinf creating module 219 creates information Sinf 68 for each content in accordance with the key information used in the encrypting process. On the other hand, at step S23, the EMD key substituting module 220 substitutes the information Sinf 68 of the DMX files 60-1, 60-2, ..., and 60-N corresponding to the contents encrypted at step S21 with the information Sinf 68 created at step S22.

The DMX files 60'-1, 60'-2, ..., and 60'-N whose information Sinf 68 has been substituted at step S23 are passed to step S24. At step S24, a usage rule 209 and a software player program 210 are input. The DMX directory creating module 208 creates a directory image 211 to be recorded in the second session in accordance with an XML file that describes instructions for all the CD 50 to be produced.

Key information with which the encrypting process has been performed for each content at step S21 is passed to step S24. At step S24, the key information for each content is correlated with the CUID of each encrypted content grouped and described in the Info_Sheet. The directory image 211 and the Info_Sheet are passed to Step 25.

At step S25, audio tracks 10, 10, ... to be recorded in the first session are input. The session combining module 212 combines the audio tracks 10, 10, ... and the directory image 211 to be recorded in the second session. The combined data is recorded on the CD-R disc 40 along with the Info_Sheet. The directory checker module 302 checks the file structure and the directory structure of the CD-R disc 40. When the file structure and the directory structure do not have any error, the CD-R disc 40 is supplied to the plant 2. Step S26 can be omitted.

At step S27, in the plant 2, data is reproduced form the CD-R disc 40. Data of the first session and the data of the second session are reproduced from the CD-R disc 40 and stored in the data storing portion 130A and the data storing portion 130B, respectively. The directory checker module 302 checks the file structure and the directory structure of the data of the second session. When the file structure and the directory structure do not have any error, the data is read from the data storing portion 130A the data storing portion 130B. At step S28, the data of the first session, the data of the second session, and the Info_Sheet are input to the disc mastering module 214.

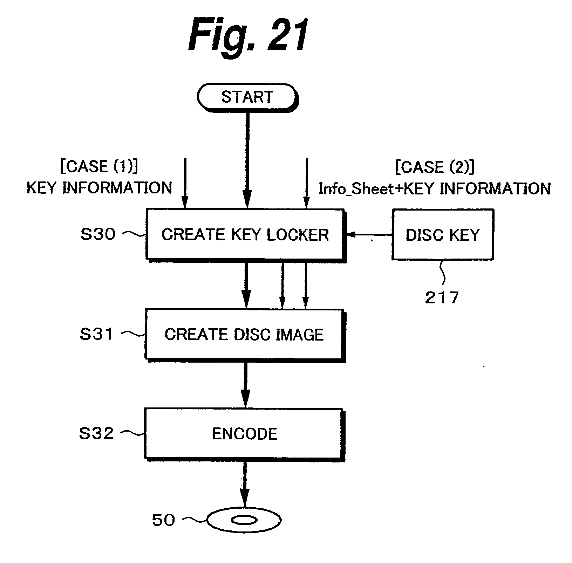

Fig. 21 is a flow chart showing an example of a process of the disc mastering module 214. At step S30, the data of the first session and the data of the second session are input to the key locker creating portion 305. In addition, in the case (1), the key information with which the contents have been encrypted is input to the key locker creating portion 305. In the case (2), the key information with which the contents have been encrypted and correlated with the CUIDs of the encrypted contents is input to the key locker creating portion 305. In addition, disc key 217 is also input to the key locker creating portion 305. With the disc key 217, the key information is further encrypted. As a result, a key locker 306 is created.

The data of the second session, the key locker 306, and the disc key 217 are input to the disc image creating portion 307. At step S31, the disc image creating portion 307 creates a disc image to be really recorded on the CD 50 in accordance with the input data. The created disc image is input to the encoder 308. At step S32, the encoder 308 encodes the disc image in accordance with the EFM system. As a result, an EFM signal is output. With the EFM signal, a master disc is created. With the master disc, a CD 50 is produced.

As described above, in the authorizing tool according to the present embodiment of the present invention, since each function is modularized. Thus, as long as an inconsistency takes place in the system, another structure other than the case (1) and the case (2) can be used.

The foregoing embodiment of the present invention is a system that produces a CD having two sessions of the first session and the second session. However, the present invention is not limited to such an example. In other words, the authoring system according to the present invention can be applied to a system that produces a CD-ROM disc having a single session.

In the foregoing example, a medium that is produced is a CD. However, the present invention is not limited to such a system. Instead, the present invention can be applied to a system that produces another medium for example a DVD.

In addition, when a hardware key referred to as dongle is applied to the computer apparatus 100 used in the studio 1 and the computer apparatus 120 used in the plant 2, the authorizing tool can be prevented from being illegally used. The dongle is connected to for example a serial port of a computer apparatus. A predetermined logical circuit is built in the dongle. In response to an input code, the activation of each module can be controlled. Alternatively, a part of a code of a module may be built in the dongle. When a module is activated, a password may be input. When a correct password is not input, the activation of the module may be stopped so as to prevent the authorizing tool from being illegally used.

As described above, according to the embodiment of the present invention, since encryption keys for contents are grouped and encrypted, as an effect of the present invention, key information can be prevented from leaking out.

On the plant side, it is determined whether or not contents supplied from the studio side have been encrypted. In accordance with the determined result, contents that have not been encrypted are encrypted. Thus, the present invention can be applied to an authoring system that allows either the studio side or the plant side to encrypt each content.

In addition, according to the present invention, since the authorizing tool is modularized for each function, an authoring system that satisfies the needs of the user can be easily structured.

In addition, since instructions to individual modules are described in an XML file of which information of meaning of parameters is embedded in tags as an effect of the present invention, the instructions to the individual modules can be easily edited.

Since the authorizing tool is modularized for each function, as an effect of the present invention, it can be easily changed and updated. When the encrypting method for contents is changed, only relevant modules such as a content encrypting module and a disc mastering module can be changed.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. An authoring apparatus, comprising:
a structure creating portion for encrypting a plurality of input contents with different keys and creating a structure for recording the plurality of contents on a recording medium; and
a data output portion for grouping the plurality of keys with which the plurality of contents have been encrypted, encrypting the grouped keys, creating the grouped encrypted keys, and outputting the plurality of contents in a recordable format to the recording medium in accordance with the structure created by the structure creating portion, the grouped encrypted keys being output by the data output portion.

2. The authoring apparatus as set forth in claim 1,
wherein the recording medium has two recording areas that are independently managed, and
wherein the authoring apparatus further comprises:
recording means for recording the plurality of contents that are encrypted contents in one recording area of the recording medium and contents that are plain text in the other recording area thereof.

3. The authoring apparatus as set forth in claim 2,
wherein the plurality of contents that are encrypted content data recorded in the first recording area correspond to the contents that are plain content data recorded in the second recording area.

4. The authoring apparatus as set forth in claim 1,
wherein the grouped encryption keys are created by correlating the keys and identifiers that identify the contents encrypted in accordance with to keys.

5. The authoring apparatus as set forth in claim 4,
wherein the grouped encrypted keys contain license information about the contents.

6. The authoring apparatus as set forth in claim 1,
wherein the structure for recording the plurality of contents on the recording medium, the plurality of contents, and the plurality of keys with which the plurality of contents have been encrypted are recorded on a predetermined recording medium and the predetermined recording medium is supplied from the structure creating portion to the data output portion.

7. An authoring method, comprising the steps of:
encrypting a plurality of input contents with different keys and creating a structure for recording the plurality of contents on a recording medium; and
grouping the plurality of keys with which the plurality of contents have been encrypted, encrypting the grouped keys, creating the grouped encrypted keys, and outputting the plurality of contents in a recordable format to the recording medium in accordance with the structure created at the structure creating step, the grouped encrypted keys being output at the data output step.

8. An authoring program for causing a computer to execute an authoring method, comprising the steps of:
encrypting a plurality of input contents with different keys and creating a structure for recording the plurality of contents on a recording medium; and
grouping the plurality of keys with which the plurality of contents have been encrypted, encrypting the grouped keys, creating the grouped encrypted keys, and outputting the plurality of contents in a recordable format to the recording medium in accordance with the structure created at the structure creating step, the grouped encrypted keys being output at the data output step.

9. A recording medium on which an authoring program has been recorded, the authoring program being configured to cause a computer to execute an authoring method, comprising the steps of:
inputting a plurality of contents, encrypting the plurality of contents with different keys, and creating a structure for recording the plurality of contents on a recording medium; and
grouping the plurality of keys with which the plurality of contents have been encrypted, encrypting the grouped keys, creating the grouped encrypted keys, and outputting the plurality of contents in a recordable format to the recording medium in accordance with the structure created at the structure creating step, the grouped encrypted keys being output at the data output step.

10. An authoring apparatus, comprising:
a structure creating portion for creating a structure for recording a plurality of input contents on a recording medium; and
a data output portion for encrypting the plurality of contents with different keys, grouping the plurality of keys with which the plurality of contents have been encrypted, encrypting the grouped keys, creating the grouped encrypted keys, and outputting the grouped encrypted keys in a recordable format to the recording medium, the grouped encrypted keys being output by the data output portion.

11. An authoring method, comprising the steps of:
creating a structure for recording a plurality of input contents on a recording medium; and
encrypting the plurality of contents with different keys, grouping the plurality of keys with which the plurality of contents have been encrypted, encrypting the grouped keys, creating the grouped encrypted keys, and outputting the grouped encrypted keys in a recordable format to the recording medium, the grouped encrypted keys being output at the data output step.

12. An authoring apparatus, comprising:
a structure creating portion for creating a structure for recording a plurality of input contents on a recording medium;
grouped encrypted key creating means for grouping a plurality of keys, encrypting the grouped keys, and creating the grouped encrypted keys;
a data output portion for outputting the plurality of contents in a format recordable to the recording medium in accordance with the structure created by the structure creating portion, the grouped encrypted keys being output by the data output portion, and
encrypting means for encrypting the plurality of contents with different keys,
wherein the encrypting means is included in at least one of the structure creating portion and the data output portion, the grouped encrypted key creating means being configured to encrypt the plurality of keys with which the plurality of contents have been encrypted and create the grouped encrypted keys.

13. An authoring method, comprising the steps of:
creating a structure for recording a plurality of input contents on a recording medium;
grouping a plurality of keys, encrypting the grouped keys, and creating the grouped encrypted keys;
outputting the plurality of contents in a format recordable to the recording medium in accordance with the structure created at the structure creating step, the grouped encrypted keys being output at the data output step, and
encrypting the plurality of contents with different keys,
wherein the encrypting step is included in at least one of the structure creating step and the data output step, the grouped encrypted key creating step being performed by encrypting the plurality of keys with which the plurality of contents have been encrypted and creating the grouped encrypted keys.

14. An authoring apparatus, comprising:
file creating means for creating a file in which a content is stored;
management information creating means for creating a management structure for managing the file created by the file creating means;
data converting means for converting the file into data in a predetermined format recordable to a recording medium in accordance with the management structure created by the management structure creating means; and
encrypting means for encrypting the content,
wherein the file creating means, the management structure creating means, the data converting means, and the encrypting means are structured as independently executable modules, and
wherein the encrypting means is configured to encrypt output data of the file creating means and output the encrypted data to the management structure creating means or encrypt output data of the management structure creating means and output the encrypted data to the data changing means.

15. The authoring apparatus as set forth in claim 14,
wherein the file is composed of the content, and management data with which the content is managed.

16. The authoring apparatus as set forth in claim 14,
wherein the file is capable of integrally handing a plurality of types of data.

17. The authoring apparatus as set forth in claim 14,
wherein the recording medium having a plurality of recording areas, and
wherein the authoring apparatus further comprises:
recording means for recording the encrypted content and plain content to a first recording area of the recording medium and a second recording area thereof, respectively.

18. The authoring apparatus as set forth in claim 17,
wherein the encrypted content recorded in the first recording area corresponds to the plain content recorded in the second recording area.

19. The authoring apparatus as set forth in claim 14,
wherein an encrypting format of the encrypting means is represented by format information, the format information being embedded in the file after the format information has been encrypted.

20. The authoring apparatus as set forth in claim 14, further comprising:
controlling means for executing instructions for the file creating means, the management structure creating means, the data converting means, and the encrypting means with an instruction file composed of a parameter and meaning data that represents meaning of the parameter.

21. The authoring apparatus as set forth in claim 20,
wherein the instruction file is in an XML format.

22. The authoring apparatus as set forth in claim 14,
wherein a software player for reproducing the content is recorded on the recording medium.

23. An authoring method, comprising the steps of:
creating a file in which a content is stored;
creating a management structure for managing the file created at the file creating step;
converting the file into data in a predetermined format recordable to a recording medium in accordance with the management structure created at the management structure creating step; and
encrypting the content,
wherein the file creating step, the management structure creating step, the data converting step, and the encrypting step are structured as independently executable modules, and
wherein the encrypting step is performed between the file creating step and the management structure creating step or between the management structure creating step and the data converting step.

24. An authoring program for causing a computer to execute an authoring method, comprising the steps of:
creating a file in which a content is stored;
creating a management structure for managing the file created at the file creating step;
converting the file into data in a predetermined format recordable to a recording medium in accordance with the management structure created at the management structure creating step; and
encrypting the content,
wherein the file creating step, the management structure creating step, the data converting step, and the encrypting step are structured as independently executable modules, and
wherein the encrypting step is performed between the file creating step and the management structure creating step or between the management structure creating step and the data converting step.

25. A recording medium on which an authoring program has been recorded, the authoring program being configured to cause a computer to execute an authoring method, comprising the steps of:
creating a file in which a content is stored;
creating a management structure for managing the file created at the file creating step;
converting the file into data in a predetermined format recordable to a recording medium in accordance with the management structure created at the management structure creating step; and
encrypting the content,
wherein the file creating step, the management structure creating step, the data converting step, and the encrypting step are structured as independently executable modules, and
wherein the encrypting step is performed between the file creating step and the management structure creating step or between the management structure creating step and the data converting step.
